(19) Europäisches Patentamt
European Patent Office
Office européen des brevets

(11) Veröffentlichungsnummer: **0 181 486**
**B1**

# (12) EUROPÄISCHE PATENTSCHRIFT

(45) Veröffentlichungstag der Patentschrift: **17.11.88**

(21) Anmeldenummer: **85112663.1**

(22) Anmeldetag: **07.10.85**

(51) Int. Cl.⁴: **C 08 G 18/67**, C 08 G 18/08, C 08 G 18/28, C 08 G 18/48, C 08 F 283/00, C 14 C 11/00, C 09 D 3/72

## (54) Wässrige Oligourethan-Dispersionen mit eingebauten, ungesättigten Gruppen.

(30) Priorität: **17.10.84 DE 3437918**

(43) Veröffentlichungstag der Anmeldung: **21.05.86 Patentblatt 86/21**

(45) Bekanntmachung des Hinweises auf die Patenterteilung: **17.11.88 Patentblatt 88/46**

(84) Benannte Vertragsstaaten: **BE CH DE FR GB IT LI LU NL SE**

(56) Entgegenhaltungen:
**EP-A-0 026 313**
**EP-A-0 098 752**
**CH-A-501 693**
**FR-A-2 342 340**
**GB-A-2 021 599**
**US-A-4 153 778**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Noll, Klaus, Dr., Morgengraben 6, D-5000 Koeln 80 (DE)**
Erfinder: **Speicher, Wolfgang, Dr., Walter-Flex-Strasse 5, D-5090 Leverkusen 1 (DE)**
Erfinder: **Schmid, Rosemarie, Schopenhauerstrasse 8, D-5090 Leverkusen 1 (DE)**
Erfinder: **Pedain, Josef, Dr., Haferkamp 6, D-5000 Koeln 80 (DE)**

**EP 0 181 486 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft hochkonzentrierte, wässrige Dispersionen von Oligourethanen zur Lederbeschichtung.

Es ist seit längerer Zeit bekannt, dass hochglänzend beschichtete Leder, auch «Lackleder», genannt, durch Beschichten mit Polymeren aus Lösung in organischen Lösungsmitteln hergestellt werden können. Neben natürlichen Polymeren haben sich im Laufe der Zeit mehr und mehr synthetische Polymere durchgesetzt, unter denen wiederum Polyurethane eine Spitzenstellung einnehmen.

Im allgemeinen werden solche Polyurethane als Zweikomponenten-Systeme verarbeitet, d.h. die Lösung einer Polyhydroxylverbindung wird mit der Lösung eines Polyisocyanats vermischt und nach dem Zusatz üblicher Additive, z.B. zur Verbesserung des Verlaufs, auf Leder appliziert. Im Verlauf von Stunden reagieren beide Komponenten miteinander und bilden einen festen, flexiblen und widerstandsfähigen Lack auf dem Ledersubstrat. Beide Komponenten sind auch nach dem Abdunsten der Lösungsmittel noch quasi flüssig und erlauben so das langsame Verfliessen zu einem hochglänzenden Film.

Auch bei den in neuerer Zeit entwickelten und in der DE-OS 2 908 628 beschriebenen Einkomponenten-Lederlacken, bei denen die Molekülvergrösserung auf dem Substrat durch Reaktion von Isocyanatgruppen mit Luftfeuchtigkeit bewirkt wird, begünstigt die Fliessfähigkeit des Polyurethans zum Zeitpunkt des Auftragens die Ausbildung eines Films mit hochglänzender Oberfläche. Die Einführung solcher Einkomponentenlacke stellt einen wesentlichen Fortschritt bei der Technologie der Lackverarbeitung dar: Solche Produkte sind bei sorgsamer Aufbewahrung über Monate lagerstabil und brauchen vor der Applikation höchstens noch verdünnt zu werden.

Eine dritte Methode des Aufbaus hochmolekularer Polyurethane aus Oligomeren wird seit einiger Zeit in einer grossen Zahl von Abwandlungen geübt: Die Molekülvergrösserung durch strahleninduzierte Polymerisation ethylenisch ungesättigter Gruppen in den Oligomeren. Solche, meist mit Acrylsäureestern modifizierten Isocyanatprepolymere werden aus Lösung (vielfach aus Lösung in gleichfalls strahlenpolymerisierbaren Monomeren, sogenannten «reaktiven Verdünnern») appliziert und durch die Einwirkung von UV-Licht oder Elektronenstrahlen ausgehärtet, was bei wenig mehr als Raumtemperatur erfolgen kann. Vor allem auf den Gebieten der Holz- und Metallackierung, insbesondere aber der Herstellung von Druckplatten sowie bei Ätzreservelacken in der elektronischen Industrie ist dieses Verfahren bereits gut eingeführt.

Seit neuerer Zeit werden auch für das Finishen und Zurichten von Leder strahlenvernetzbare Systeme eingesetzt (Rev. Techn. Ind. Cuir 74 (1982), S. 58 ff). Auf dem Gebiet der Hochglanzlackierung von Leder ist eine solche Verfahrensweise jedoch nur ganz vereinzelt ausprobiert worden.

In der GB-PS 2 031 000 wird die Beschichtung von Leder mit einer Komposition, die zu 10–60% unter anderem auch aus einem Acrylat-modifizierten Oligourethan besteht und die nach dem Auftrag durch UV-Strahlung (gegebenenfalls nach Zusatz eines Photoinitiators) oder Elektronenstrahlen vernetzt werden kann, beansprucht. Insbesondere im Vergleich mit der in der Technik gut bekannten Beschichtung von Leder mit Nitrocellulose ergeben sich Vorteile wie bessere Wasser- und Abriebbeständigkeit und besserer Griff und Glanz. Ob diese erhaltenen beschichteten Leder den Anforderungen an Hochglanz-Lackleder genügen, ist der Anmeldung nicht zu entnehmen.

Das gilt auch für das in der FR-PS 2 429 838 angegebene Verfahren zum Lackieren von Leder aus Lösung, das mit einer Mischung von endständig ethylenisch ungesättigten Oligourethanen und monomeren Derivaten der Acryl- bzw. Methacrylsäure, z.B. ihren Estern mit Trimethylolpropan und Hexandiol-1,6, ausgeführt wird. Die Modifizierung der Oligourethane wird hier vorzugsweise mit Acrylsäure vorgenommen.

Die Applikation von Polymeren aus Wasser wurde auf dem Gebiet der Hochglanz-Lederlackierung noch nicht versucht. Zwar ist in der Ledertechnologie die Zurichtung mit wässrigen Systemen gut bekannt (siehe z.B. Rev. Techn. Ind. Cuir 67 (1975), S. 164); diese betrifft aber nur die Veredelung der Lederoberfläche mit sehr dünn aufgetragenen Überzügen und nicht die Erzeugung von hochglänzenden Beschichtungen («Hochglanz-Lederlackierung»), welche die Narbenstruktur völlig verdecken. Eine solche Verfahrensweise der Applikation aus wässrigen Systemen hat einige prinzipielle Vorzüge, wie etwa die totale Unbrennbarkeit des Lösungs- bzw. Dispergiermittels (nämlich Wasser) und die Umweltverträglichkeit der bei der Trocknung solcher Überzüge entstehenden Dämpfe.

Verfahren zur Hochglanzbeschichtung von Leder mit wässrigen Polyurethansystemen sind in der Praxis bisher nicht bekannt. Unternimmt man mit «klassischen», also hochmolekularen, wässrigen Polyurethan-Dispersionen, wie sie häufig in der Literatur und stellvertretend z.B. in DE-OS 1 495 745 beschrieben sind, Versuche, hochglänzende Lacke auf Leder zu erzeugen, so ist bald klar, dass durch Direktbeschichtung auf Leder mit solchen Produkten kaum ein selbst nur mittlerer Glanz zu erzeugen ist, geschweige denn eine spiegelglatte Oberfläche. Meist entstehen teilweise zu Pfützen zusammengelaufene Überzüge, die auch noch unregelmässige Risse und Schrunden aufweisen. Auch mit neueren Polyurethandispersionen, wie etwa in DE-OS 3 134 161 beschrieben, lassen sich nicht einmal halbwegs befriedigende Lacke erzeugen.

Aufgabe der vorliegenden Erfindung ist es also, Polyurethane in in Wasser gelöster oder dispergierter Form zur Verfügung zu stellen, mit denen durch Auftrag auf gegebenenfalls mit Polymeren grundiertes Leder durch Spritzen, Rakeln oder

Giessen ein Verbundartikel erzeugt wird, der den für Lackleder typischen Hochglanz aufweist. Die Lösung dieser Aufgabe erscheint dadurch erschwert, dass die Applikation von PU-Oligomeren mittleren Molekulargewichts und anschliessender Molekülvergrösserung auf dem Substrat sowohl wegen des Lösungs- bzw. Dispergiermittels als auch wegen der Natur des Substrats nicht mit herkömmlichen Mitteln der Polyurethanchemie bewerkstelligt werden kann. So verbietet sich der Einsatz freier NCO-Gruppen wegen ihrer Reaktivität gegenüber Wasser; die Anwendung verkappter Isocyanatgruppen zur thermisch induzierten Reaktion auf dem Leder ist wegen dessen thermischer Empfindlichkeit weitgehend ausgeschlossen; sinngemäss gilt gleiches für die Anwendung formaldehydabspaltender Harze in Kombination mit Oligourethanen.

Gegenstand der Erfindung sind hochkonzentrierte, wässrige, gegebenenfalls inerte Lösungsmittel und/oder reaktive, ungesättigte Verdünner enthaltende Dispersionen von UV-strahlenvernetzbaren Oligourethanen zur Herstellung von hochglänzenden Lacküberzügen auf Leder enthaltend ein Umsetzungsprodukt aus

a) 30–85,8 Gew.-% eines oder mehrerer Makrodiole mit einem Molekulargewicht von 400–6000, aus der Gruppe bestehend aus Polyetherdiolen, Polyesterdiolen, Polylactondiolen und Polycarbonatdiolen oder ihren Mischungen, wobei die Makrodiole oder ihre Mischungen einen Schmelzpunkt unter 30 °C aufweisen,

b) 1–12 Gew.-% an gegenüber Isocyanatgruppen mono- oder difunktionellen anionischen oder nichtionischen Verbindungen, wobei die anionischen Verbindungen Carboxylat- oder Sulfonatgruppen als dispergierend wirkende Zentren und OH- oder $NHR_1$-Gruppen ($R_1$=H, Alkyl oder Aryl) als isocyanatreaktive Gruppen und die nichtionischen Verbindungen längerkettige Polyoxyethylensegmente als dispergierende Gruppen enthalten,

c) 12–65 Gew.-% an (cyclo)aliphatischen, araliphatischen und/oder aromatischen Diisocyanaten,

d) 0,2–10 Gew.-% an niedermolekularen, überwiegend difunktionellen Kettenverlängerern mit molekulargewichten unter 400, die Hydroxylgruppen und/oder freie oder verkappte Aminogruppen tragen und

e) 1–15 Gew.-% an Verbindungen der allgemeinen Formel

$$HO{-}R{-}O{-}CO{-}\overset{\overset{\displaystyle R'}{|}}{C}{=}CH_2,$$

wobei

R einen difunktionellen, gegebenenfalls verzweigten Kohlenwasserstoffrest mit 2–10 Kohlenstoffatomen und

R′ Wasserstoff oder einen Kohlenwasserstoffrest mit 1–4 Kohlenstoffatomen bedeutet, wobei die Oligourethane eine Doppelbindungszahl von 2,5 bis 15 g Brom/100 g Oligourethan-Feststoff und ein Molekulargewicht von 3000 bis 18 000 besitzen.

Die erfindungsgemäss zu verwendenden wässrigen Dispersionen von Oligourethanen unterscheiden sich mithin von den in EP-A 0 026 313 und US-A 4 153 778 beschriebenen Dispersionen im wesentlichen dadurch, dass das verwendete Kettenverlängerungsmittel nicht überwiegend polyfunktionell, sondern überwiegend difunktionell ist, und daher besonders geeignet zur Beschichtung von Leder sind, während die vorbekannten Urethanbindemittel vorzugsweise für andere Substrate empfohlen werden.

Darüber hinaus fehlen in den Oligourethanen gemäss US-A 4 153 778 die charakteristischen Gruppierungen b) mit dispergierender Wirkung.

Eine besondere Ausführungsform der vorliegenden Erfindung ist die Verwendung von Polyurethanen in einem Verfahren zur Erzeugung von hochglänzenden Lacküberzügen auf Leder, dadurch gekennzeichnet, dass wässrige Dispersionen der erfindungsgemässen Oligourethane mit einem mittleren Molekulargewicht von 3000 bis 18 000 und einer Doppelbindungszahl von 2,5 bis 15 g Brom/100 g Oligourethan eingesetzt werden und die Ausbildung eines trockenen, elastischen, abriebfesten Lackes durch die Einwirkung von UV-Strahlen bei Temperaturen von ≤50 °C vorgenommen wird.

Aus den so aufgebauten, wässrigen Dispersionen lassen sich mittels Vernetzung durch UV-Strahlen weiche, elastische, kratz- und wasserfeste Lacke erzeugen, die in ihren Eigenschaften hochmolekularen, ausreagierten Polyurethanlakken aus wässriger Dispersion gleichkommen, ihnen gegenüber jedoch den Vorteil der Ausbildung einer homogenen, hochglänzenden Oberfläche besitzen. Es ist überraschend, dass dies auf dem Wege der UV-Strahlenvernetzung bewerkstelligt werden kann, denn diese Vernetzung bewirkt die Ausbildung von verzweigten Strukturen, die generell durch hohe Härte und geringe Dehnbarkeit charakterisiert sind. Setzt man den Gehalt an UV-vernetzbaren Gruppen herab, so wird bald der Punkt erreicht, an dem die meisten ungesättigten Gruppen im festen Film keine Reaktionspartner für eine Polymerisation mehr finden und deshalb für eine Molekülvergrösserung unwirksam sind. Nicht vorherzusehen war aber, dass bei mittleren Molekulargewichten des Urethanoligomeren durch UV-Vernetzung Polymere erhalten werden können, die einen völlig ausreichenden Polymerisierungsgrad und damit einhergehend z.B. gute Lösungsmittelbeständigkeit aufweisen und trotzdem die nachteiligen Eigenschaften eines verzweigten Polymeren nicht zeigen; sie sind im Gegenteil weich und elastisch, gegenüber Knickbeanspruchung ausgezeichnet beständig und führen überraschend zu den erwünschten Hochglanz-Lackierungen.

Für die unter a) aufgeführten Makrodiole (höhermolekularen Dihydroxyverbindungen) des mittleren Molekulargewichts 400 bis 6000, vorzugsweise 500 bis 3000, sind insbesondere Dihydroxyverbindungen wie

die in der Polyurethan-Chemie an sich bekannten Dihydroxypolyester aus Dicarbonsäuren, z.B. Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder verschiedenen isomeren Bishydroxymethylcyclohexane;

die in der Polyurethanchemie an sich bekannten Polylactone, wie z.B. die auf den obengenannten zweiwertigen Alkoholen gestarteten Polymerisate des Caprolactons;

die in der Polyurethanchemie an sich bekannten Polycarbonate, wie sie durch Umsetzung beispielsweise der obengenannten Diole mit Diarylcarbonaten oder Phosgen zugänglich sind;

die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins geeignet. Ethylenoxid wird vorzugsweise anteilmässig mitverwendet mit der Massgabe, dass der verwendete Polyether maximal ca. 10 Gew.-% an Ethylenoxid enthält. Im allgemeinen werden jedoch solche Polyether eingesetzt, die ohne Mitverwendung von Ethylenoxid erhalten werden.

Unter diesen Makrodiolen sind Polyesterdiole besonders bevorzugt, da sie eine wirksame Sperre gegen im Leder befindliche Fettstoffe darstellen und deren Auswandern und Ablagerung auf der Lackoberfläche verhindern. Unbeschadet dessen können bis zu 40% des Makrodiols auch aus Polyetherdiolen bestehen, diese erhöhen in der Regel den Glanz des Lackes. Der ausschliessliche Einsatz von bei Raumtemperatur gut kristallisierenden Polyestern hat eine empfindliche Glanzminderung zur Folge. Diese kann erfindungsgemäss vermieden werden, wenn nur nicht oder nur schlecht kristallisierende Makrodiole, insbesondere Polyesterdiole verwendet werden, oder schlecht bzw. gut kristallisierende Makrodiole (z.B. Polyoxytetramethylendiole oder Polyester wie Hexandiol/Adipinsäureester) im Gemisch mit ausreichenden Mengen an die Kristallisation verhindernden Makrodiolen (wie Polyoxypropylendiolen oder nicht bzw. schlecht kristallisierenden Polyestern, z.B. Neopentylglykol enthaltenden Polyestern) eingesetzt werden. Besonders geeignet sind als nicht-kristallisierende Makrodiole flüssige Polyetherdiole.

In einer weiteren Ausführungsform werden Makrodiole eines mittleren Molekulargewichts von 500 bis 3000 eingesetzt, die aus 100–60 Gew.-% der nicht oder nur unvollständig kristallisierenden Polyesterdiole (Fp $\leqslant$ 35 °C) und aus 0 bis 40 Gew.-% der Poly-oxy-$C_2$- und/oder$C_3$-alkylendiole, vorzugsweise solchen auf Polyoxypropylendiol-Basis, welche bis zu 40 Gew.-% Oxyethyleneinheiten anstelle von Oxypropyleneinheiten enthalten können, zusammengesetzt sind. Die Polyesterdiole besitzen vorzugsweise Schmelzpunkte unter 30 °C. In Polyether-haltigen Makrodiol-Mischungen soll der Gehalt an Oxethyleneinheiten 10 Gew.-% in der Makrodiol-Mischung nicht übersteigen.

Vertreter der anionischen Verbindungen b) sind in hoher Zahl in der Literatur zur Herstellung von Polyurethan-Dispersionen beschrieben, z.B. in der DE-OS 1 495 745, DE-OS 2 651 506, in der EP-A 75 775 und der US-PS 4 269 748. Besonders bevorzugte Vertreter sind: 2,2-Dimethylolpropionsäure oder ihre Salze, die mono- bis tetrapropoxylierten Addukte von Natrium- oder Kalium-bisulfit an Buten-2-diol-1,4; 2-Aminoethylaminoethylsulfonsaures Natrium, tert.-Amindiole, wie z.B. N-Methyl-diethanolamin und ihre Salze mit Säuren. Die dispergierend wirkenden Gruppen werden in dispergierend wirkenden Mengen entsprechend dem Stand der Technik eingesetzt.

Die nicht-ionisch, dispergierende Gruppen tragenden Verbindungen b) sind solche, die längerkettige Polyoxyethylensegmente mit 5–90 Oxyethyleneinheiten enthalten und gegenüber Isocyanaten di-, bevorzugt monofunktionell sind. Solche dispergierenden Verbindungen sind unter anderem in der DE-OS 2 651 506 detailliert beschrieben und können in beliebiger Kombination mit den ionischen Vertretern dieser Verbindungsklasse b) eingesetzt werden; sie verbessern unter anderem die Beständigkeit der mit ihnen hergestellten Dispersionen gegen den Einfluss von Fremdionen und starken pH-Veränderungen (d.h. gegen ionische Koagulation).

Die unter c) angeführten Diisocyanate werden durch die allgemeine Formel

$$Q(NCO)_2$$

beschrieben.

Hierin bedeutet Q einen aliphatischen Kohlenwasserstoffrest mit 4 bis 12 Kohlenstoffatomen, einen cycloaliphatischen Kohlenwasserstoffrest mit 6 bis 18 Kohlenstoffatomen, einen aromatischen Kohlenwasserstoffrest mit 6 bis 18 Kohlenstoffatomen oder einen araliphatischen Kohlenwasserstoffrest mit 7 bis 15 Kohlenstoffatomen.

Geeignete Beispiele für die verschiedenen Gruppen finden sich in der DE-OS 2 854 384 und der DE-OS 2 920 501 sowie der US-PS 4 269 748.

Bevorzugte Diisocyanate sind beispielsweise Toluylen-2,4 und/oder 2,6-diisocyanat, Diphenylmethan-2,4'-2,2'-und/oder -4,4'-diisocyanat und ihre Kern-Monomethyl-substituierten Derivate, m- und/oder p-Xylylendiisocyanat, $\alpha,\alpha,\alpha',\alpha'$-Tetramethyl-m- (und/oder p-)-xylylendiisocyanat, Hexandiisocyanat, Trimethylhexandiisocyanat, Isophorondiisocyanat, Dicyclohexyl-methan-4,4'-(und/oder2,4'-und/oder-2,2'-)-diisocyanat und ihre Mono- und Dimethyl-substituierten Derivate, insbesondere das 3,3'-Dimethyl-4,4'-dicyclohexylmethandiisocyanat. Besonders bevorzugt sind 20–100 Mol-% der eingesetzten

Diisocyanate als cycloaliphatische Diisocyanate mit 6–15 C-Atomen im Kohlenwasserstoffrest, insbesondere wird das 4,4'-Diisocyanato-dicyclohexylmethan und/oder das Isophorondiisocyanat eingesetzt.

In untergeordneten Mengen können Mono- und/oder Triisocyanate zur Molekulargewichtsregulierung mitverwendet werden.

Als niedermolekulare, gegebenenfalls mehr als difunktionelle Kettenverlängerer d) eignen sich zum Beispiel die unter a) angeführten, zur Herstellung der Polyesterdiole geeigneten Diole, ferner Triole wie Glycerin, Trimethylolpropan, Hexantriol-1,2,6, Trimethylolethan oder in sehr geringen Anteilen höherfunktionelle Polyole wie Pentaerythrit und Sorbit. Im allgemeinen sollte die Funktionalität dieser Kettenverlängerer 2 sein, aber 3 nicht übersteigen; mehr als difunktionelle Kettenverlängerer werden neben difunktionellen nur in untergeordneten Mengen (0–10 Mol-% der Kettenverlängerer) eingesetzt. Als Kettenabbrecher können auch monofunktionelle Verbindungen in untergeordneten Mengen (0–10 Mol-% der Kettenverlängerer) mitverwendet werden.

Zur Kettenverlängerung eignen sich auch Aminogruppen enthaltende niedermolekulare Verbindungen wie Hydrazin, sowie aliphatische und/oder cycloaliphatische primäre Diamine wie Ethylendiamin, Tetramethylendiamin, Hexamethylendiamin, 2,2,4-Trimethylhexamethylendiamin, 3,5,5-Trimethyl-3-aminomethyl-cyclohexylamin, 4,4'-Diamino-dicyclohexylmethan, 3,3'-Dimethyl-4,4'-diamino-dicyclohexylmethan, Dimethylentriamin und andere. Aromatische Polyamine sind für diesen Zweck schlecht geeignet.

Ausser in ihrer freien Form sind die Polyamine auch bevorzugt in blockierter Form einsetzbar. Hierbei handelt es sich um die Umsetzungsprodukte der Amine mit Aldehyden und Ketonen, aber auch um hydroxyfunktionelle Oxazolidine und/oder Ketazine, z.B. 1-(2-Hydroxyethyl)-2-isopropyl-oxazolidin, bzw. die Azine des Acetons, Methylethylketons oder Methylisobutylketons.

In ihrer verblockten Form – als Ald- bzw. Ketimine – reagieren sie nicht mit Isocyanatgruppen, bevor nicht zutretendes Wasser oder Luftfeuchtigkeit die Aminogruppen wieder freisetzt. Die blockierten Kettenverlängerer sind bei der Herstellung der erfindungsgemässen Oligourethane in Abwesenheit von Lösungsmitteln von Bedeutung. Besonders bevorzugt ist hier das Bisacetonimin des Hydrazins: Acetonazin.

Bei der Komponente e) handelt es sich insbesondere um Ester der Acrylsäure und/oder Methacrylsäure mit mindestens zweiwertigen aliphatischen Alkoholen, vorzugsweise des Molekulargewichtsbereichs 62 bis 300. Typische derartige Verbindungen sind beispielsweise 2-Hydroxyethylacrylat, 2-Hydroxyethylmethacrylat, 2-Hydroxypropylacrylat, 2-Hydroxyethylmethacrylat, 2-Hydroxypropylacrylat, 2-Hydroxypropylmethacrylat, 3- und 4-Hydroxybutylacrylat, 3- und 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethyl-hexylmethacrylat, die Di(meth)acrylsäureester des 1,1,1-Trimethylolpropans oder des Glycerins. Besonders bevorzugte Ausgangskomponenten (ii) sind 2-Hydroxyethyl- und 2-Hydroxypropylacrylat bzw. -methacrylat. Beliebige Gemische derartiger Verbindungen können selbstverständlich ebenfalls eingesetzt werden.

Die Umsetzung der Komponenten zu den erfindungsgemässen, UV-vernetzbaren Oligourethanen erfolgt zweckmässig in mehreren Schritten.

Zunächst erfolgt die Bildung eines Isocyanatprepolymeren aus den Makrodiolen, Diisocyanaten, hydrophil modifizierten Komponenten und gegebenenfalls den niedermolakularen Kettenverlängerern, soweit diese Hydroxylgruppen tragen. Sinngemäss werden die hydrophil modifizierten Komponenten, die Aminogruppen tragen, bei diesem Schritt nicht mitverwendet.

Die Umsetzung erfolgt im allgemeinen durch Vermischen der Komponenten bei erhöhter Temperatur. Diese sollte 40 bis 100 °C, vorzugsweise 50 bis 80 °C, betragen, generell ist dafür zu sorgen, dass unerwünschte Nebenreaktionen unterbunden werden. Es ist daher oft zweckmässig, bei relativ niedrigen Temperaturen innerhalb der genannten Temperaturbereiche und unter Verwendung von bekannten, die Isocyanat-Additionsreaktion beschleunigenden Katalysatoren zu arbeiten. Geeignete Katalysatoren sind beispielsweise tertiäre Amine wie Triethylamin, Triethylendiamin oder Dimethylbenzylamin oder beispielsweise bekannte Zinn-Katalysatoren wie Zinndioctoat oder Dibutylzinndilaurat. Dieser Schritt erfolgt vorzugsweise in Abwesenheit von Lösungsmitteln, gegebenenfalls nur in den ohnehin in der resultierenden Dispersion als Hilfsmittel vorhandenen inerten Lösungsmitteln. Die stöchiometrischen Verhältnisse der Komponenten werden so gewählt, dass das NCO/OH-Verhältnis zwischen 1,1 und 3, vorzugsweise zwischen 1,2 und 2,5 liegt.

In einem zweiten Schritt werden die verbliebenen Isocyanatgruppen jetzt teilweise oder ganz mit den ethylenisch ungesättigte Gruppen enthaltenden, im wesentlichen monofunktionellen Verbindungen umgesetzt. Bei diesem Schritt ist es besonders wichtig, für die Einhaltung möglichst niedriger Reaktionstemperaturen Sorge zu tragen, um unerwünschte Polymerisationsreaktionen zu vermeiden. 80 °C sollte als Obergrenze für diese Umsetzung angesehen werden. Durch diese Kettenabbruchsreaktion der NCO-Verbindungen mit den im wesentlichen monofunktionellen Verbindungen wird das Molekulargewicht der Oligourethane begrenzt.

Bevorzugt werden die olefinisch ungesättigten Endgruppen durch Reaktion von Isocyanatgruppen mit Verbindungen e) in die Polyurethanoligomeren eingebaut.

Die Umsetzung der nun noch verbliebenen Isocyanatgruppen kann auf verschiedene Weise erfolgen. Nach Aufnahme der modifizierten Prepolymeren in einem geeigneten Lösungsmittel, das natürlich gegenüber Isocyanatgruppen inert sein sollte, kann mit, vorzugsweise Aminogruppen enthaltenden, niedermolakularen Kettenverlängerern umgesetzt werden. Es ist jedoch auch möglich, das modifizierte Prepolymer in Wasser zu dispergieren und die weitere Molekülvergrösserung der bekannten Isocyanat/Wasser-Reaktion zu überlassen. Bevorzugt ist allerdings die Umsetzung des Prepolymeren in wässriger Phase mit Di- und/oder Polyaminen, besonders bevorzugt in Form ihrer Aldimine, Ketimine, Azine oder Oxazolidine. Diese Verfahren sind in den DE-OS 2 725 589, 2 732 131 und 2 811 148 ausführlich beschrieben.

Verwendet man bei Kettenverlängerung die Di- und/oder Polyamine nicht in den blockierten Formen oder in einer Reaktion in wässriger Phase sondern in Lösung, so können die Schritte zwei und drei auch vertauscht werden und die Modifizierung mit ethylenisch ungesättigten Gruppen am Ende erfolgen.

In jedem Fall ist aber die ethylenisch ungesättigte, im wesentlichen monofunktionelle Verbindung in solcher Menge einzusetzen, dass das entstehende Oligourethan nur ein Molekulargewicht von 3 000 bis 18 000, bevorzugt 3 000 bis 12 000 und insbesondere 6 000 bis 18 000 aufweist. Im bevorzugten Fall der Anwendung von difunktionellen Komponenten wie Makrodiolen, Diisocyanaten und Kettenverlängerungsmitteln und der monofunktionellen, ethylenisch ungesättigte Gruppen tragenden Verbindungen, besitzt ein Molekül des Oligourethans zwei ethylenisch ungesättigte Gruppen, wenn – bevorzugt – nur Komponenten e) eingesetzt werden, die lediglich eine ungesättigte Gruppe tragen.

Die erfindungsgemäss notwendige Reduzierung des Molekulargewichts der Oligourethane kann aber auch alleine oder zusätzlich durch Mitverwendung monofunktioneller Komponenten, z.B. der Komponenten b), c) und d) erreicht werden.

Die gegebenenfalls mitverwendeten Lösungsmittel ohne ethylenisch ungesättigte Gruppen, die gegenüber Isocyanaten inert sein sollen, können unter den schwach bis stark polaren Substanzen nahezu beliebig gewählt werden. Sollen sie nach der Überführung des Oligourethans in eine wässrige Dispersion aus dieser entfernt werden, so müssen sie einen deutlich niedrigeren Siedepunkt als Wasser besitzen. Beispiele sind Ethylacetat, Aceton, Methylethylketon oder Toluol.

Lösungsmittel, die jedoch in der Dispersion verbleiben sollen, um im daraus geformten Film, z.B. als Verlaufsförderer zu wirken, können einen deutlich höheren Siedepunkt als Wasser aufweisen; es sind dies z.B. Dimethylformamid, Dimethylacetamid oder N-Metyhl-pyrrolidon, oder auch Propylenglykolmonomethylether; weniger bevorzugt können sie auch nicht polar sein, wie z.B. höhersiedende aromatische Kohlenwasserstoffe, z.B. Xylol.

Im weiteren Sinne als Lösungsmittel können auch «reaktive, ungesättigte Verdünner», d.h. ethylenisch ungesättigte niedermolakulare Verbindungen, welche gegenüber Isocyanat inert sind oder auch Hydroxylgruppen tragen, angesehen werden, wie etwa Ester der Acryl- oder Methacrylsäure mit aliphatischen $C_1$–$C_8$-, cycloaliphatischen $C_5$–$C_6$-, araliphatische $C_7$–$C_8$-Monoalkoholen, beispielsweise Methylacrylat, Ethylacrylat, n-Propylacrylat, n-Butylacrylat, Methylhexylacrylat, 2-Ethylhexylacrylat und die entsprechenden Methacrylsäureester; Cyclopentylacrylat, Cyclohexylacrylat oder die entsprechenden Methacrylsäureester; Benzylacrylat, β-Phenylethylacrylat und entsprechende Methacrylsäureester; Hydroxylalkylester der Acryl- oder Methacrylsäure mit 2 bis 4 C-Atomen in der Alkoholkomponente, wie 2-Hydroxyethylacrylat, 2-Hydroxypropylacrylat, 3-Hydroxypropylacrylat, 2-Hydroxybutylacrylat, 4-Hydroxybutylacrylat oder entsprechende Methacrylsäureester; Di- und Polyacrylate sowie Di- und Polymethacrylate von Glykolen mit 2 bis 6 C-Atomen und Polyolen mit 3 bis 4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)-acrylate von Polyetherglykolen des Glykols, Propandiol-1,3, Butandiol-1,4, tetraoxethyliertes Trimethylolpropantrisacrylat; aromatische Vinyl- und Divinylverbindungen, wie Styrol, Methylstyrol, Divinylbenzol; N-Methylolacrylamid oder N-Methylolmethacrylamid sowie entsprechende N-Methylolalkylether mit 1 bis 4 C-Atomen in der Alkylethergruppe bzw. entsprechende N-Methylolallylether, insbesondere N-Methoxymethyl(meth)acrylamid, N-Butoxymethyl(meth)-acrylamid und N-Allyloxymethyl-(meth)acrylamid; Vinylalkylether mit 1 bis 4 C-Atomen in der Alkylgruppe, wie Vinylmethylether, Vinylethylether, Vinylpropylether, Vinylbutylether; Trimethylolpropandiallylethermono(meth) acrylat, Vinylpyridin, N-Vinylcarbazol, Triallylphosphat, Triallylisocyanurat und andere.

Diese beispielhaft aufgezählten, olefinisch ungesättigten «Lösungsmittel» stellen in Wirklichkeit keine echten Lösungsmittel dar, sondern sind vielmehr als «reaktive Verdünner» anzusehen, da sie bei der Strahlenvernetzung der erfindungsgemässen Verfahrensprodukte mit diesen unter Copolymerisation abreagieren. Die reaktiven Verdünner werden der Polyurethan-Dispersion gegebenenfalls erst nach Abdestillieren der inerten, keine olefinische Gruppen enthaltenden Lösungsmittel zugesetzt. Die wässrigen Oligo-PU-Dispersionen enthalten bis zu 40 Gew.-%, bezogen auf Festsubstanz, vorzugsweise bis zu 20 Gew.-%, insbesondere bis zu 10 Gew.-%, Lösungsmittel und/oder «reaktive Verdünner».

Die erfindungsgemässen Oligourethane, bzw. ihre Kombinationen mit diesen reaktiven Verdünner werden mit UV-Licht vernetzt. Hierbei ist es erforderlich, Zusätze hinzuzufügen, die einerseits die Inhibierung der radikalischen Vernetzung durch Luftsauerstoff verhindern und andererseits die Strahlenvernetzung initiieren.

Zusätze, die der Inhibierungsverhinderung dienen, sind beispielsweise Phenole und Phenolderivate, vorzugsweise sterisch gehinderte Phenole,

die in beiden o-Stellungen zur Hydroxylgruppe Alkylsubstituenten tragen, Amine, vorzugsweise sekundäre Acrylamine und ihre Derivate, Kupfer-(I)-Salze organischer Säuren oder Anlagerungsverbindungen von Cu-(I)-halogeniden an Phosphite.

Als Fotoinitiatoren sind die üblicherweise eingesetzten Verbindungen geeignet, beispielsweise Benzophenon sowie ganz allgemein aromatische Ketoverbindungen, die sich vom Benzophenon ableiten, wie Alkylbenzophenone, halogenmethylierte Benzophenone, gemäss DE-OS 1 949 010, Michlers Keton, Antron, halogenierte Benzophenone. Ferner eignen sich Benzoin und seine Derivate, etwa gemäss DE-OS 1 769 168, 1 769 853, 1 769 854, 1 807 297, 1 807 301, 1 916 678 oder 2 430 081 und DE-AS 1 694 149. Ebenfalls wirksame Fotoinitiatoren stellen Anthrachinon und zahlreiche seiner Derivate dar, beispielsweise β-Methylanthrachinon tert.-Butylanthrachinon und Anthrachinoncarbonsäureester, ebenso Oximester gemäss DE-OS 1 795 089.

Die erwähnten Fotoinitiatoren, die je nach Verwendungszweck der erfindungsgemässen Massen in Mengen zwischen 0,1 und 20 Gew.-% vorzugsweise 0,1 bis 5 Gew.-%, bezogen auf polymerisierbare Komponenten, eingesetzt werden, können als einzelne Substanz oder, wegen häufiger vorteilhafter synergistischer Effekte, auch in Kombination miteinander verwendet werden.

Die erfindungsgemässen Oligourethane lassen sich in Wasser in einem weiten Konzentrationsbereich dispergieren. Während sogar 10–20%ige Dispersionen stabil sind, so sind doch höhere Konzentrationen, z.B. von 45–55%, gegebenenfalls bis 65 Gew.-%, bevorzugt, da feststoffreiche Dispersionen bereits mit einem einzigen Auftrag ausreichend dicke Filme erzeugen und die in der Regel höhere Viskosität bei einigen Auftragsarten, z.B. beim Giessen, von Vorteil ist.

Die erfindungsgemässen Oligourethan-Dispersionen können auf verschiedene Weise auf das Ledersubstrat aufgebracht werden, z.B. durch Spritzen, Rakeln oder Giessen. Hierbei ist besonders der Giessauftrag von Bedeutung, bei dem ein kontinuierlicher senkrecht fallender «Vorhang» aus der wässrigen Lackdispersion erzeugt wird, durch den das Leder über eine Fördereinrichtung bewegt wird. Dabei nimmt nur die Lederoberfläche Lack an, der seitlich vorbeifliessende Teil des Lack-«Vorhang» wird wieder im Vorratsgefäss aufgefangen und somit nicht vergeudet. Die fertig lackierten Leder werden anschliessend lediglich forciert getrocknet (etwa 10 Minuten bei 60 °C) und in nicht völlig getrocknetem Zustand der UV-Vernetzung zugeführt.

Als Strahlenquellen zur Durchführung der Fotopolymerisation können künstliche UV-Strahler, deren Emission im Bereich von 250 bis 500 nm, vorzugsweise 300 bis 400 nm, liegt, verwendet werden. Vorteilhaft sind Quecksilberdampf-, Xenon- und Wolfram-Lampen, insbesondere Quecksilberhochdruckstrahler.

In der Regel lassen sich Schichten der erfindungsgemässen Reaktionsprodukte mit einer Dicke zwischen 50 μm und 1 mm in weniger als 1 Sekunde zu einem Film aushärten, wenn sie mit dem Licht (UV-Strahlen) einer ca. 8 cm entfernten Quecksilberhochdrucklampe, beispielsweise vom Typ HTQ-7 der Firma Philips, bestrahlt werden.

Eine Mitverwendung von Pigmenten erschwert mit zunehmendem Gehalt die Fotopolymerisation. In der Regel ist sie aber auch nicht erforderlich, da Leder-Hochglanzlacke überwiegend klar auf pigmentierte Grundierungen aufgebracht werden.

Nach der UV-Vernetzung werden die lackierten Leder noch einer Nachtrocknung unterzogen, insbesondere um ins Leder eingedrungenes Wasser zu entfernen. Hierbei können aber auch hochsiedende Lösungsmittel, die dem Lack zur Verlaufsförderung zugesetzt wurden, verdunsten.

Beispiel 1

870 Teile einer bei Raumtemperatur flüssigen, praktisch klaren Mischung von Makrodiolen aus 700 Teilen eines Polyesters aus Ethylenglykol, Adipinsäure und Phthalsäure mit einer OH-Zahl von 64 (A) und 170 Teilen eines Polyesters aus Hexandiol-1,6, Neopentylglykol (Molverhältnis der Glykole 65:35) und Adipinsäure mit einer OH-Zahl von 66 (B), 168 Teile eines propoxylierten Adduktes von Natriumbisulfit an Buten-2-diol-1,4 mit einem Molgewicht von 425 (C), sowie 60 Teilen eines Bishydroxydimethylpolysiloxans (D), werden zusammen bei 100 °C im Wasserstrahlvakuum entwässert und anschliessend bei dieser Temperatur mit 419,2 Teilen 4,4'-Diisocyanatodicyclohexylmethan (E), zu einem Isocyanatprepolymeren mit einem NCO-Gehalt von 3,3% umgesetzt.

Anschliessend wird bei 80 °C mit 92,2 Teilen 2-Hydroxypropylmethacrylat («Oxyester») umgesetzt. Der NCO-Gehalt beträgt dann noch etwa 1,5%. Nach Hinzufügen von 160 Teilen N-Methylpyrrolidon und 7,4 Teilen Acetonazin wird mit 1820 Teilen Wasser versetzt. Es entsteht eine 45%ige wässrige Dispersion des Festkörpers.

Dieser weist eine Doppelbindungszahl von 6,3 (g Br/100 g Festkörper) auf.

Das Molekulargewicht beträgt etwa 9500.

Bei den Beispielen 2 bis 9 werden nach der in Beispiel 1 beschriebenen Verfahrensweise wässrige Dispersionen von Festkörpern erhalten, deren Zusammensetzung in der folgenden Tabelle angegeben ist.

Tabelle

| Beispiel | 2 | 3 | 4 | 5 | 6 | 7 | 8 | 9 |
|---|---|---|---|---|---|---|---|---|
| Doppelb.-Zahl | 4,15 | 7,65 | 6,84 | 6,45 | 4,47 | 5,72 | 10,28 | 10,96 |
| Konzentration (%) | 45 | 35 | 50 | 35 | 45 | 50 | 35 | 40 |
| Acetonazin (Tle) | 9,3 | 7,4 | 7,4 | 8,6 | 12,5 | 12,5 | 4,5 | 4,5 |
| «Oxyester» (Tle) | 69,1 | 92,2 | 92,2 | 108 | 72 | 72 | 144 | 144 |
| Diisocyanat (Tle) | E, 419,2 | E, 419,2 | E, 419,2 | E, 445,4 | E, 445,4 | E, 445,4 | E, 445,4 | E, 445,4 |
| Kettenverl. (Tle) | – | F 26 | – | – | K, 10,8 | L, 17,7 | K 16,1 K 16,1 | K, 16,1 |
| Sulfonatdiol (Tle) | 126 | 168 | 168 | 168 | 147 | 134,4 | 147 | 126 |
| Makrodiol II (Tle) | – | D, 30 | G, 111 | H, 450 | H, 383 | – | – | M, 180 |
| Makrodiol I (Tle) | A, 1125 | B, 595 | A, 700 | B, 680 | I, 720 | I, 700 | B, 799 | B, 544 |
| Durchschnittliches Molekulargewicht* | 14.000 | 6.000 | 6.500 | 8.000 | 13.000 | 10.000 | 4.500 | 3.500 |

*Bestimmt durch Gelpermeationschromatographie in $CH_2$–Cl-Lösung.

A–E: siehe Beispiel 1
F: Tetraethylenglykol
G: Propoxyliertes Bisphenol A, OH-Zahl 200
H: Polyester aus Butandiol-1,4 und Adipinsäure, OH-Zahl 50
I: Polyester aus Ethylenglykol, Diethylenglykol, Butandiol-1,4 (12:13:20) und Adipinsäure, OH-Zahl 56
K: Trimethylolpropan (1.1.1-Tris-hydroxymethyl-propan)
L: Hexandiol -1,6
M: Polyester aus Butandiol-1,4 und Adipinsäure, OH-Zahl 124.

Beispiel 10

Ein mit gut abbindenden Fettungsmitteln gefettetes Leder wird mit feinkörnigem Schleifmaterial geschliffen und anschliessend entstaubt.

Anschliessend wird mit einer Grundierung behandelt, die aus folgenden Bestandteilen zusammengesetzt ist:

100–150 Teile eines mit Kasein formulierten handelsüblichen Russ-Pigments (Eukanol®-Schwarz-D; BAYER AG, D-5090 Leverkusen)

450–400 Teile Wasser

100 Teile eines gut füllenden, weichen handelsüblichen Polybutadien- Acrylnitril- Latex (35%) (Baygen®-Grund CA 43 093 der BAYER AG)

100 Teile einer 30%igen handelsüblichen Dispersion eines weichen anionischen Polyurethans (Shore A: 10–20) (Bayderm®-Grund 10 UD der BAYER AG).

Nach zweimaligem Plüschauftrag wird gebügelt (65 °C).

Auf das waagerecht liegende Leder wird nun ein Spritzauftrag mit folgender Zubereitung ausgeführt:

100 Teile der Dispersion aus Beispiel 2
5 Teile Formaldehyd (30%ig)
0,5 Teile 4-Methyl-2,6-di-tert.-butylphenol
5 Teile Benzophenon.

Nach der Trocknung bei 60 °C (10 Minuten) bleibt ein Feststoffauftrag von 90 $g/m^2$ auf dem Leder wird dieses mit 5 cm/sec unter einer Hochdruckquecksilber-Lampe mit 100 W/cm einmal durchbewegt. Nach dem senkrechten Hängen über Nacht wird ein mit einem trockenen hochglänzenden Lack beschichtetes Leder erhalten.

Beispiel 11

Auf ein wie in Beispiel 10 grundiertes Leder wird ein Giessauftrag wie folgt aufgebracht.

Aus
100 Teilen der Dispersion aus Beispiel 1 und
5 Teilen Formaldehyd (30%ig)
0,5 Teilen 4-Methyl-2,6-di-tert.-butyl-phenol
5 Teilen Benzophenon
wird eine Mischung bereitet, die auf einer handelsüblichen Giessmaschine zu einem fallenden, flächigen, gleichmässig etwa 0,5 mm dicken Film geformt wird. Durch diesen Film wird das Leder mit einer solchen Geschwindigkeit hindurchbewegt, dass ein Trockenauftrag von 110 $g/m^2$ zurückbleibt. Nach Trocknen und UV-Härtung wie in Beispiel 10 beschrieben, wird ein hochglanzlackiertes Leder erhalten.

## Patentansprüche

1. Hochkonzentrierte, wässrige, gegebenenfalls inerte Lösungsmittel und/oder reaktive, ungesättigte Verdünner enthaltende Dispersionen von UV-strahlenvernetzbaren Oligourethanen zur Herstellung von hochglänzenden Lacküberzügen auf Leder enthaltend ein Umsetzungsprodukt aus

a) 30–85,8 Gew.-% eines oder mehrerer Makrodiole mit einem Molekulargewicht von 400–6000, aus der Gruppe bestehend aus Polyetherdiolen, Polyesterdiolen, Polylactondiolen und Polycarbonatdiolen oder ihren Mischungen, wobei die Makrodiole oder ihre Mischungen einen Schmelzpunkt unter 30 °C aufweisen,

b) 1–12 Gew.-% an gegenüber Isocyanatgruppen mono- oder difunktionellen anionischen oder nichtionischen Verbindungen, wobei die anionischen Verbindungen Carboxylat- oder Sulfonatgruppen als dispergierend wirkende Zentren und OH- oder $NHR_1$-Gruppen ($R_1$=H, Alkyl oder Aryl) als isocyanatreaktive Gruppen und die nichtionischen Verbindungen längerkettige Polyoxyethylensegmente als dispergierende Gruppen enthalten,

c) 12–65 Gew.-% an (cyclo)aliphatischen, araliphatischen und/oder aromatischen Diisocyanaten,

d) 0,2–10 Gew.-% an niedermolekularen, überwiegend difunktionellen Kettenverlängerern mit Molekulargewichten unter 400, die Hydroxylgruppen und/oder freie oder verkappte Aminogruppen tragen und

e) 1–15 Gew.-% an Verbindungen der allgemeinen Formel

$$HO{-}R{-}O{-}CO{-}\overset{\displaystyle R'}{\overset{|}{C}}{=}CH_2,$$

wobei

R einen difunktionellen, gegebenenfalls verzweigten Kohlenwasserstoffrest mit 2–10 Kohlenstoffatomen und

R' Wasserstoff oder einen Kohlenwasserstoffrest mit 1–4 Kohlenstoffatomen bedeutet, wobei die Oligourethane eine Doppelbindungszahl von 2,5 bis 15 g Brom/100 g Oligourethan-Feststoff und ein Molekulargewicht von 3000 bis 18 000 besitzen.

2. Dispersionen nach Anspruch 1, dadurch gekennzeichnet, dass sie als Makrodiole a) solche eines Molekulargewichtes von 500 bis 3000 eingebaut enthalten, die zu 100–60 Gew.-% aus nicht oder nur unvollständig kristallisierenden Polyestern mit Schmelzpunkten $\leqslant$ 35 °C und zu 0–40 Gew.-% aus Polyoxy-$C_2$- und/oder $C_3$-alkylendiolen bestehen.

3. Dispersionen nach Anspruch 1, dadurch gekennzeichnet, dass sie als Komponente b) 2,2-Dimethylol-propionsäure, und/oder mono- bis tetrapropoxylierte Addukte von Na- oder K-Bisulfit an Buten-2-diol-1,4 und/oder tertiäre Amindiole und/oder längerkettige, mono- oder difunktionelle Verbindungen, die längerkettige Polyoxyethylensegmente mit 5 bis 90 Oxyethyleneinheiten besitzen, eingebaut enthalten.

4. Dispersionen nach Ansprüchen 1 bis 3, dadurch gekennzeichnet, dass sie mit Diisocyanaten c) in Form von aliphatischen und/oder cycloaliphatischen Diisocyanaten aufgebaut sind.

5. Dispersionen nach Ansprüchen 1 bis 4, dadurch gekennzeichnet, dass sie mit 4,4'-Dicyclohexyl-diisocyanat al Diisocyanat c) aufgebaut sind.

6. Dispersionen nach Ansprüchen 1 bis 5, dadurch gekennzeichnet, dass sie als niedermolekulare Kettenverlängerer aliphatische und/oder cycloaliphatische primäre Diamine und/oder Hydrazin eingebaut enthalten.

7. Dispersionen nach Ansprüchen 1 bis 6, dadurch gekennzeichnet, dass sie als ungesättigte Verbindungen e) Hydroxylgruppen aufweisende Ester der Acrylsäure und/oder Methacrylsäure mit mindestens zweiwertigen (cyclo)aliphatischen Alkoholen des Molekulargewichtsbereichs 62 bis 300, eingebaut enthalten.

8. Dispersionen nach Ansprüchen 1 bis 7, dadurch gekennzeichnet, dass sie bis zu 20 Gew.-%, bezogen auf Festsubstanz, Lösungsmittel und/

oder reaktive Verdünner, welche gegenüber NCO inert sind, und ethylenisch ungesättigte Gruppen aufweisen, enthalten.

9. Dispersionen nach Ansprüchen 1–8, dadurch gekennzeichnet, dass die darin enthaltenen Oligourethane ein mittleres Molekulargewicht von 6000 bis 18 000 aufweisen.

**Revendications**

1. Dispersions aqueuses fortement concentrées, contenant éventuellement des solvants inertes et/ou des diluants réactifs insaturés, d'oligouréthannes réticulables par les ultraviolets pour préparer sur du cuir des revêtements de vernis à brillant élevé, ces dispersions contenant un produit de réaction de

a) 30 à 85,8% en poids d'un ou plusieurs macrodiols ayant un poids moléculaire de 400 à 6 000, du groupe constitué par des polyétherdiols, des polyesterdiols, des polylactonediols et des polycarbonatediols ou leurs mélanges, les macrodiols ou leurs mélanges présentant un point de fusion inférieur à 30 °C,

b) 1 à 12% en poids de composés anioniques ou non ioniques, monofonctionnels ou difonctionnels à l'égard de groupes isocyanates, les composés anioniques contenant des groupes carboxylates ou des groupes sulfonates comme centres à rôle de dispersion et des groupes –OH ou $-NHR_1$ ($R_1$ représentant un atome d'hydrogène, un groupe alkyle ou aryle) comme groupes pouvant réagir avec les isocyanates, et les composés non ioniques contenant des segments polyoxyéthylène à longue chaîne comme groupes à rôle dispersant,

c) 12 à 65% en poids de diisocyanates (cyclo) aliphatiques, araliphatiques et/ou aromatiques,

d) 0,2 à 10% en poids d'agents, à bas poids moléculaire, surtout difonctionnels, d'allongement des chaînes, ces agents ayant des poids moléculaires inférieurs à 400, et portant des groupes hydroxyles et/ou des groupes amino libres ou coiffés, et

e) 1 à 15% en poids de composés répondant à la formule générale

$$HO{-}R{-}O{-}CO{-}\underset{}{\overset{R'}{\overset{|}{C}}}{=}CH_2$$

dans laquelle

R représente un reste d'hydrocarbure difonctionnel, éventuellement ramifié, comportant 2 à 10 atomes de carbone, et

R' représente un atome d'hydrogène ou un reste d'hydrocarbure comportant 1 à 4 atomes de carbone, les oligo-uréthannes ayant un rombre de doubles liaisons, ou un indice de doubles liaisons, correspondant à 2,5 à 15 g de brome/100 g d'oligo-uréthanne en matière sèche, et ayant un poids moléculaire de 3000 à 18 000.

2. Dispersions selon la revendication 1, caractérisées en ce qu'elles contiennent, comme macrodiols a) sincorporés, ceux ayant un poids moléculaire de 500 à 3000, qui consistent, pour 100 à 60% en poids, en des polyesters ne cristallisant pas du tout ou ne cristallisant que de manière incomplète et ayant des points de fusion inférieurs ou égaux à 35 °C, et pour 0 à 40% en poids en des polyoxy-alkylène-diols, dont les groupes alkylènes sont en $C_2$ et/ou en $C_3$.

3. Dispersions selon la revendication 1, caractérisées en ce qu'elles contiennent, comme composants b) incorporés, de l'acide 2,2-diméthylolpropionique et/ou des produits monopropoxylés à tétrapropoxylés d'addition de bisulfite de Na ou de K sur le butène-2-diol-1,4 et/ou des aminodiols tertiaires et/ou des composés monofonctionnels ou difonctionnels à longue chaîne, qui possèdent des segments polyoxyéthylène à longue chaîne comportant 5 à 90 motifs oxyéthylène.

4. Dispersions selon les revendications 1 à 3, caractérisées en ce qu'elles sont réalisées à l'aide de diisocyanates c) sous forme de diisocyanates aliphatiques et/ou cycloaliphatiques.

5. Dispersions selon les revendications 1 à 4, caractérisées en ce qu'elles sont réalisées à l'aide du 4,4'-diisocyanate de dicyclohexyle comme diisocyanate(s).

6. Dispersions selon les revendications 1 à 5, caractérisées en ce qu'elles contiennent, à titre d'agents à bas poids moléculaire d'allongement des chaînes, des diamines primaires, aliphatiques et/ou cycloaliphatiques et/ou de l'hydrazine incorporée(s).

7. Dispersions selon les revendications 1 à 6, caractérisées en ce qu'elles contiennent, à l'état incorporé, comme composés insaturés e), des esters, présentant des groupes hydroxyles, de l'acide acrylique et/ou de l'acide méthacrylique avec des alcools (cyclo)aliphatiques au moins divalents, dont la gamme du poids moléculaire va de 62 à 300.

8. Dispersions selon les revendications 1 à 7, caractérisées en ce qu'elles contiennent jusqu'à 20% en poids, par rapport à la matière sèche, de solvants et/ou de diluants réactifs, qui sont inertes à l'égard de NCO et qui présentent des groupes à insaturation éthylénique.

9. Dispersions selon les revendications 1 à 8, caractérisées en ce que les oligo-uréthannes qui y sont contenus présentent un poids moléculaire moyen allant de 6000 à 18 000.

**Claims**

1. High concentrated, aqueous dispersions optionally containing inert solvents and/or reative unsaturated thinners, of UV-radiation-crosslinkable oligourethanes for the preparation of high gloss lacquer coatings on leather, which dispersions contain a reaction product of

a) 30–85.8% by weight of one or more macrodiols having a molecular weight of 400–6000, from the group consisting of polyether-diols, polyester-diols, polylactone-diols and polycarbonate-diols or their mixtures, with the macrodiols or their mixtures having a melting point below 30 °C,

b) 1–12% by weight of anionic or nonionic compounds which are monofunctional or difunctional towards isocyanate groups, with the anionic compounds containing carboxylate or sulphonate groups as dispersant centres and OH- or $NHR_1$- groups ($R_1$ = H, alkyl or aryl) as isocyanatereactive groups and the nonionic compounds containing longer-chain polyoxyethylene segments as dispersant groups,

c) 12–65% by weight of(cyclo)aliphatic, araliphatic and/or aromatic diisocyanates,

d) 0.2–10% by weight of low molecular, predominantly difunctional chain lengtheners with molecular weights of less than 400, which carry hydroxyl groups and/or free or blocked amino groups and

e) 1–15% by weight of compounds of the general formula

$$HO-R-O-CO-\overset{R'}{\overset{|}{C}}=CH_2,$$

wherein

R denotes a difunctional, optionally branched hydrocarbon radical with 2–10 carbon atoms and

R′ denotes hydrogen or a carbon radical with 1–4 carbon atoms, the oligourethanes having a double bond number of 2.5 to 15 g of bromine/100 g of oligourethane solids and a molecular weight of 3000 to 18,000.

2. Dispersions according to Claim 1, characterized in that they contain, incorporated as macrodiols a) those which have a molecular weight of 500 to 3000 and which consist to the extent of 100–60% by weight of non-crystallizing or only incompletely crystallizing polyesters with melting points of $\leqslant$ 35 °C and to the extent of 0–40% by weight of polyoxy-$C_2$- and/or $C_3$-alkylendiols.

3. Dispersions according to Claim 1, characterized in that they contain, incorporated as component b), 2,2-dimethylolpropionic acid and/or monopropoxylated to tetrapropoxylated adducts of Na bisulphite or K bisulphite with but-2-ene-1,4-diol and/or tertiary aminediols and/or longer-chain, monofunctional or difunctional compounds which possess longer-chain polyoxyethylene segments with 5 to 90 oxyethylene units.

4. Dispersions according to Claims 1 to 3, characterized in that they are made up with diisocyanates c) in the form of aliphatic and/or cycloaliphatic diisocyanates.

5. Dispersions according to Claims 1 to 4, characterized in that they are made up with 4,4′-dicyclohexyl diisocyanate as the diisocyanate c).

6. Dispersions according to Claims 1 to 5, characterized in that they contain, incorporated as low molecular chain lengtheners, aliphatic and/or cycloaliphatic primary diamines and/or hydrazine.

7. Dispersions according to Claims 1 to 6, characterized in that they contain, incorporated as unsaturated compounds e) esters, possessing hydroxyl groups, of acrylic acid and/or methacrylic acid with at least divalent (cyclo)aliphatic alcohols of molecular weight range 62 to 300.

8. Dispersions according to Claims 1 to 7, characterized in that they contain up to 20% by weight, based on solids, of solvents and/or reactive thinners which are inert towards NCO and possess ethylenically unsaturated groups.

9. Dispersions according to Claims 1–8, characterized in that the oligourethanes contained therein have a mean molecular weight of 6000 to 18,000.